# EUROPÄISCHE PATENTSCHRIFT

(11) **EP 1 424 225 B1**
(45) Veröffentlichungstag und Bekanntmachung des Hinweises auf die Patenterteilung: **09.07.2008**
(21) Anmeldenummer: 03025923.8
(22) Anmeldetag: 12.11.2003
(51) Int. Cl.: B60G 7/00, F16F 1/38

(54) **Gummilager mit Sensor**
Rubber bearing with sensor
Palier élastique avec capteur

(30) Priorität: 26.11.2002 DE 10255234
(43) Veröffentlichungstag der Anmeldung: 02.06.2004
(73) Patentinhaber: ZF Lemförder Metallwaren AG, 49448 Lemförde (DE)
(72) Erfinder: Spratte, Joachim, 49090 Osnabrück (DE); Loreit, Uwe, 35578 Wetzlar (DE)

(56) Entgegenhaltungen:
- DE-C1- 10 052 248
- US-A- 5 814 999

## Beschreibung

Die vorliegende Erfindung betrifft ein Lager, insbesondere ein Lager für einen Lenker einer Radaufhängung eines Fahrzeugs.

Sensorsysteme weisen einen Messgrößengeber und einen Sensor auf, wobei der Messgrößengeber die von dem Sensor zu erfassende physikalische Größe liefert. Zur Erfassung dieser physikalischen Größe wird von dem Sensor ein physikalischer Effekt ausgenutzt, der auf der Wechselwirkung zwischen dem Sensor und dieser physikalischen Größe beruht. Dies ist auch dort der Fall, wo der Messgrößengeber und der Sensor relativ zueinander beweglich angeordnet sind und die relative Lage vom Sensor zum Messgrößengeber und/oder die relative Bewegung des Sensors zum Messgrößengeber über den Sensor erfasst werden soll. Bei derartigen Lösungen besteht regelmäßig die Gefahr, dass störende Einflüsse die Genauigkeit der Messung beeinträchtigen. Insbesondere kann in den Raumbereich zwischen Sensor und Messgrößengeber Schmutz eindringen, der zu Fehlmessungen führen kann. Zur Minimierung dieser Gefahren werden regelmäßig Gehäuse oder andere Abschirmungen verwendet, die den räumlichen Bereich zwischen Sensor und Messgrößengeber vor dem Eindringen von Schmutz und Feuchtigkeit schützen sollen. Die bisherigen Lösungen sind aber aufwendig und kostenintensiv.

Die US 5,814,999 offenbart bereits ein Lager für einen Lenker einer Radaufhängung mit einem Innenring sowie einem Außenring, welche über ein magnetorheologisches Elastomer miteinander verbunden sind. Am Innenring ist eine Elektrode angeordnet, welche mit einem elektrischen Strom beaufschlagt wird. Verdrehbewegungen vom Innenring gegenüber dem Außenring, welcher lediglich geerdet ist, führen zu einer Walkbewegung des Elastomers, dass dadurch seine dielektrischen Eigenschaften verändert, wodurch an der Elektrode ein geänderter elektrischer Zustand erfasst werden kann, der in einer bestimmten Abhängigkeit zu der Verdrehung von Innenring zu Außenring steht. Hierzu ist eine aufwendige Schaltungsanordnung notwendig sowie ein spezielles Elastomer, so dass diese Vorrichtung insgesamt sehr aufwendig und kostenintensiv ist.

Der Erfindung liegt die Aufgabe zugrunde, eine einfache Möglichkeit bereitzustellen, die relative Bewegung zweier Bauteile zueinander zu erfassen und den räumlichen Bereich zwischen Sensor und Messgrößengeber auf einfache, kostengünstige und dauerhafte Weise gegen störende Einflüsse wie z. B. Schmutz und Feuchtigkeit zu schützen.

Diese Aufgabe wird erfindungsgemäß durch ein Lager mit den Merkmalen nach Anspruch 1 gelöst. Bevorzugte Weiterbildungen sind in den Unteransprüchen beschrieben.

Das erfindungsgemäße Gummilager für einen Lenker einer Radaufhängung eines Fahrzeugs weist mindestens einen im oder am Gummilager angeordneten Sensor auf, der die relative Bewegung der durch das Gummilager miteinander verbundenen Fahrzeugteile ermittelt, wobei das Gummilager einen Innenring und einen Außenring, welche über ein Elastomer miteinander verbunden sind, aufweist, und der räumliche Bereich zwischen dem Sensor und einem die von dem Sensor zu erfassende physikalische Größe liefernden Messgrößengeber mit einem Elastomer gefüllt ist bzw. der Sensor und der Messgrößengeber in dem Elastomer eingebettet sind. Der Messgrößengeber ist ein ein Magnetfeld hervorrufender bzw. verändernder Gegenstand, wobei der Sensor als Magnetfeldsensor ausgebildet ist. Der Begriff Sensor ist dabei nicht zu eng auszulegen, so dass auch Sensorbauelemente oder Sensorbaugruppen von dem Begriff Sensor erfasst sein können. Ein auf Magnetfeldern basierendes Messsystem hat sich im Kraftfahrzeug als besonders störunanfällig erwiesen, wobei der Sensor zum Beispiel als Hallsensor oder als magnetoresistiver Sensor ausgebildet sein kann.

Das Füllen des räumlichen Bereichs zwischen dem Sensor und dem Messgrößengeber verhindert erfindungsgemäß das Eindringen von störenden Einflüssen wie z. B. Schmutz oder Feuchtigkeit. Das erfindungsgemäße Lager ist ferner einfach und kostengünstig realisierbar, da keine konstruierte bzw. gebaute Lösung, wie zum Beispiel ein Gehäuse, zum Schutz des räumlichen Bereichs zwischen Sensor und Messgrößengeber verwendet wird.

Während der Herstellung des Lagers kann der Bereich zwischen Sensor und Messgrößengeber in einfacher Weise mit Elastomer gefüllt und anschließend vulkanisiert werden. In einem besonders günstigen Fall bildet das Lager sogar selbst eine räumliche Begrenzung für das einzuspritzende, flüssige Elastomer, so dass die Spritzform vereinfacht und somit der in konstruktiver Hinsicht zu treibende Aufwand zur Herstellung des erfindungsgemäßen Lagers nochmals reduziert werden kann.

Bevorzugt ist das erfindungsgemäße Lager als Gummidrehlager ausgebildet, welches zum Beispiel als drehbare Befestigung der Radaufhängung an der Fahrzeugkarosserie verwendet wird. Das erfindungsgemäße Lager ist aber nicht auf eine derartige Verwendung beschränkt, sondern kann zum Beispiel auch als Motorlagerung oder außerhalb des Kraftfahrzeugbereichs Verwendung finden.

Vorzugsweise ist der Messgrößengeber als Permanentmagnet ausgelegt, so dass keine äußere Energiezufuhr für den Betrieb des Messgrößengebers erforderlich ist.

Der Messgrößengeber kann einen einzigen oder mehrere Permanentmagnete aufweisen, bevorzugt ist der Messgrößengeber jedoch als Polring ausgelegt, bei dem einander entgegengesetzt polarisierte Permanentmagnete unmittelbar benachbart und zusammen einen Ring bildend angeordnet sind. Ein derartiger Polring begünstigt aus Symmetriegründen eine zylinderförmige Ausbildung des erfindungsgemäßen Lagers, welche im Kraftfahrzeugbereich für Elastomerlager bzw. Gummilager ohnehin üblich ist.

Ferner kann aus Symmetriegründen der Sensor an einem zu dem Polring konzentrischen Ring angeordnet sein, wobei der zwischen diesem Ring und dem Polring vorhandene Raum zumindest teilweise mit dem Elastomer gefüllt ist.

Der magnetische Messgrößengeber kann aber auch in Form einer Zahnstange oder eines Zahnrades aus magnetischem, insbesondere ferromagnetischem Material als passiver Messgrößengeber ausgelegt sein, der das von einem am Sensor angeordneten Magneten erzeugte Magnetfeld beeinflusst. In Abhängigkeit davon, ob zum Beispiel ein Zahn oder eine Lücke zwischen zwei Zähnen dem Magneten gegenübersteht, ändert sich das Magnetfeld, was von dem Sensor erfasst werden kann.

Der Sensor und der Messgrößengeber werden regelmäßig zur Ermittlung eines Maßes (wie z.B. eines Winkels) verwendet, wobei der Messgrößengeber auch selbst dieses Maß verkörpern kann. Bei dem bevorzugt verwendeten Polring wird dies dadurch deutlich, dass der Abstand der einzelnen Magneten zueinander bzw. der Abstand der Polwechsel zwischen den einzelnen Magneten eine Maßgrundlage für den zu messenden Winkel bilden kann. Der Polring kann somit selbst Maßverkörperung sein. Das gleiche gilt auch bei der Ausbildung des Messgrößengebers als Zahnrad aus magnetischem Werkstoff, wobei der Abstand der Zähne bzw. der Zahnflanken die Maßgrundlage bilden kann.

Elastomerbauteile haben hinsichtlich ihrer Beweglichkeit regelmäßig sechs Freiheitsgrade, wobei üblicherweise nur die Bewegung hinsichtlich eines einzigen Freiheitsgrades über den Sensor detektiert werden soll. Somit können sich jedoch Bewegungen hinsichtlich der restlichen fünf Freiheitsgrade störend auf die Messung auswirken. Dies kann zwar durch eine geeignete Anordnung und Ausrichtung des Messgrößengebers und/oder des Lagers verhindert oder zumindest verringert werden, dafür ist es allerdings erforderlich, den Sensor sehr genau in dem Lager zu positionieren bzw. das Lager beim Einbau sehr genau zu orientieren, was für eine Serienfertigung ungünstig ist. Besonders einfach können die durch die Störbewegungen hinsichtlich der fünf verbleibenden Freiheitsgrade hervorgerufenen Signalstörungen dadurch verringert werden, dass zumindest ein weiterer Sensor in dem erfindungsgemäßen Lager angeordnet ist, über den zumindest ein Teil der Signalstörungen erfasst bzw. kompensiert werden kann. Falls als Messgrößengeber ein Polring und als Sensorträger ein konzentrischer Ring verwendet wird, ist es besonders vorteilhaft, einen zweiten Sensor in oder an dem konzentrischen Ring dem ersten Sensor diametral gegenüberliegend anzuordnen. Bei dieser Lösung können Randeffekte ferner dadurch verringert werden, dass bei einer zylinderförmigen Ausbildung des Lagers und des Polringes das Verhältnis von Zylinderlänge und Zylinderdurchmesser möglichst groß gewählt ist und die Sensoren hinsichtlich der Längserstreckung des Polringes mittig angeordnet sind.

Der Durchmesser des Polringes kann kleiner als der Durchmesser des konzentrischen Rings sein, wobei die Sensoren an der inneren Mantelfläche des konzentrischen Rings angeordnet sind. Bevorzugt bildet der Polring aber einen äußeren Ring, von dem der einen inneren Ring bildende konzentrische Ring und das Elastomer umschlossen sind. Da in Kraftfahrzeugen häufig der innere Ring eines Gummilagers fest mit der Fahrzeugkarosserie verbunden ist, hat diese Anordnung der Sensoren den Vorteil, dass eine Verkabelung zwischen den Sensoren und einer am Fahrzeugaufbau angeordneten Auswerteeinheit nicht über bewegliche Teile geführt werden muss.

Zur Verstärkung des Magnetfeldes im Zentrum des Gummilagers kann vorzugsweise ein als Schlussring bezeichneter Ring aus ferromagnetischem Material um den Polring herum angeordnet sein, der nach Möglichkeit ohne Luftspaltbildung an dem Polring anliegt. Dieser Schlussring kann dabei selbst den äußeren Ring des Lagers bilden oder aber noch von einem zusätzlichen Außenring umgeben sein.

Das erfindungsgemäße Lager kann zur Messung des Niveaus eines Kraftfahrzeugs eingesetzt werden, um unter Verwendung des gemessenen Abstands zwischen Fahrzeugaufbau und Fahrbahn z. B. den Strahlungswinkel von Scheinwerfern nachzuführen oder eine Korrektur des Fahrzeugniveaus mit Hilfe einer aktiven Niveauregulierung vorzunehmen. Bevorzugt wird das Lager aber zur Schwingungsund Vibrationsmessung in einem Kraftfahrzeug verwendet.

Die Erfindung wird nachfolgend anhand einer bevorzugten Ausführungsform unter Bezugnahme auf die Zeichnung beschrieben. In der Zeichnung zeigen:
- Figur 1:: Eine Schnittdarstellung und Draufsicht auf ein Gummilager gemäß dem Stand der Technik mit Angabe möglicher typischer Bewegungen des Lagers;
- Figur 2:: das Gummilager nach Figur 1, wobei bestimmten Störgrößen und der Einfederungsbewegung typische Werte im PKW-Bereich zugeordnet sind;
- Figur 3:: eine Schnittansicht einer Ausführungsform des erfindungsgemäßen Lagers; und
- Figur 4:: eine schematische Ansicht der Ausführungsform nach Figur 3 im eingebauten Zustand.

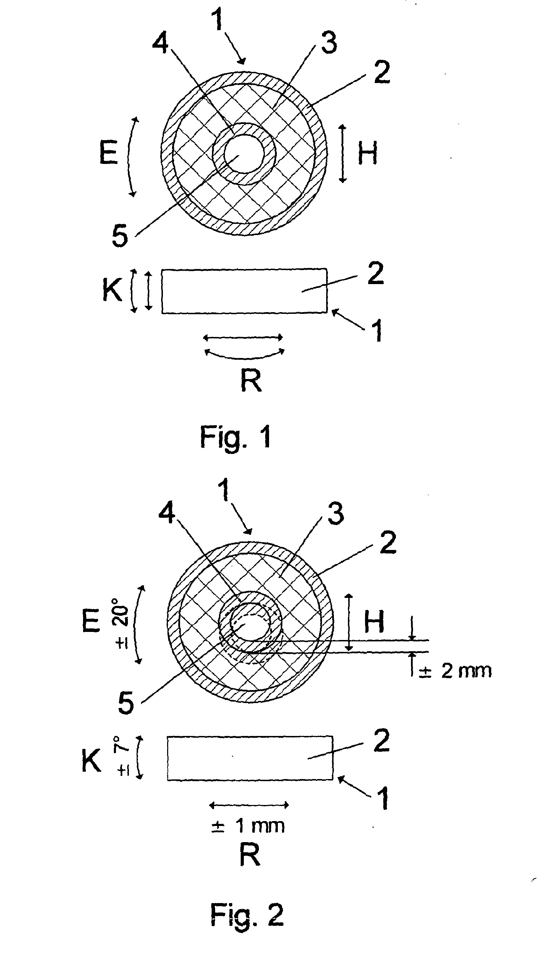

Die Figur 1 zeigt eine Querschnittsdarstellung sowie eine Draufsicht auf ein Gummilager 1 gemäß dem Stand der Technik. Das Gummilager 1 hat einen Außenring 2 sowie einen Innenring 4, die beide über einen Gummiring 3 miteinander verbunden sind. Der Begriff Ring ist dabei im Sinne der Anmeldung nicht zu eng auszulegen, so dass auch von der Kreisform abweichende Querschnitte möglich sind. Der Außenring 2 wird zum Beispiel an dem Lenker eines Fahrzeugs starr befestigt, wohingegen der Innenring mittels seines Hohlraums 5 zum Beispiel einen Teil der Karosserie des Fahrzeugs umgreift und fest mit diesem verbunden ist. Aufgrund der Gummiwalkbewegung des Gummirings 3 können sich der nicht dargestellte Lenker und die ebenfalls nicht dargestellte Karosserie in einem gewissen Bereich zueinander bewegen. In der Regel ist das Gummilager derart an der Karosserie befestigt, dass die Einfederung des Fahrzeugs eine Verdrehung des Innenrings 4 gegenüber dem Außenring 2 und somit gleichsam eine Walkbewegung des Gummis bewirkt. Die Winkeländerung aufgrund der Einfederung ist in der Figur 1 mit dem Pfeil E gekennzeichnet.

Wie der Figur 2 zu entnehmen ist, bewirkt die Ein- bzw. Ausfederung (Pfeil E) von der Nulllage in der Regel eine typische Winkeländerung von ca. 20°. Neben der Einfederungsbewegung sind zudem kleine Schubbewegungen längs der Raumachsen möglich. Diese sind durch die Pfeile H, R und K gekennzeichnet und stellen Störbewegungen dar, die eventuell zu Messfehlern des Einfederungswinkels führen. Die Störbewegung H kennzeichnet dabei die Schubbewegung in vertikaler Richtung. Die Pfeilrichtung R kennzeichnet die Schubbewegung in horizontaler Richtung, und der Pfeil K die Kardanik, die sowohl um die vertikale Richtung als auch um die horizontale Richtung erfolgen kann. Unter vertikaler Richtung ist dabei eine Richtung senkrecht zur Längsachse des Lagers zu verstehen, wobei die horizontale Richtung eine Richtung senkrecht zur Längsachse und senkrecht zur vertikalen Richtung bezeichnet. Die Längsachse kann dabei als Mittelachse des Außenrings 2 bzw. des Innenrings 4 definiert werden.

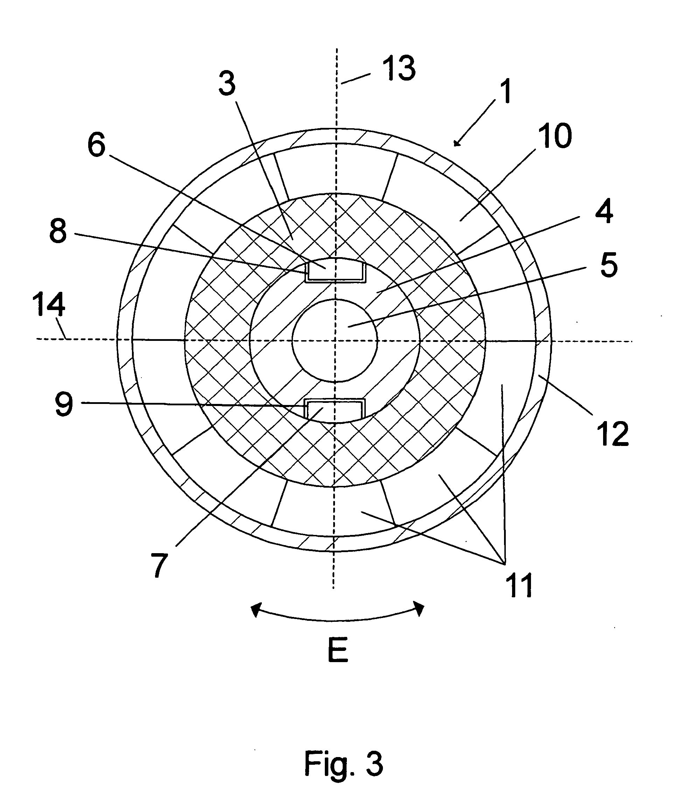

Aus Figur 3 ist eine Schnittansicht einer Ausführungsform des erfindungsgemäßen Lagers 1 ersichtlich, wobei gleiche oder ähnliche Merkmale mit denselben Bezugszeichen bezeichnet werden wie bei dem aus den Figuren 1 und 2 ersichtlichen Lager. An dem Innenring 4 sind einander diametral gegenüberliegend zwei Sensoren 6 und 7 angeordnet, welche in in dem Innenring 4 vorgesehenen Ausnehmungen 8 und 9 eingesetzt sind. Der Innenring 4 ist von einem Polring 10 umgeben, der konzentrisch zu dem Innenring 4 angeordnet ist und mehrere Permanentmagnete 11 aufweist, die hinsichtlich der Längsachse des Lagers 1 in radialer Richtung polarisiert sind. Dabei sind die magnetischen Polarisierungen von zwei einander unmittelbar benachbart angeordneten Permanentmagneten 11 des Polrings 10 einander entgegengesetzt orientiert. In der Figur 3 weist der Polring 10 insgesamt zehn Permanentmagnete auf, von denen der Übersichtlichkeit halber nur drei mit dem Bezugszeichen 11 bezeichnet sind. In der Praxis kann der Polring 10 aber auch eine davon abweichende Anzahl an Permanentmagneten aufweisen.

Der Raum zwischen dem inneren Ring 4 und dem Polring 10 ist mit Elastomer bzw. Gummi 3 gefüllt, so dass ein Eindringen von Schmutz oder Feuchtigkeit in den Bereich zwischen den Sensoren 6, 7 und dem Polring 10 sicher verhindert ist. Der Polring 10 ist von einem ferromagnetischen Schlussring 12 umgeben, der das Magnetfeld im Zentrum des Gummilagers 1 verstärkt. Der Schlussring 12 bildet nach dieser Ausführungsform gleichzeitig den Außenring des Lagers, allerdings kann der Schlussring 12 auch noch von einem zusätzlichen Außenring umgeben sein.

Über die als magnetoresistive Sensoren ausgebildeten Sensoren 6 und 7 kann eine Verdrehung E des Polrings 10 gegenüber dem Innenring 4 gemessen werden, wobei die Verdrehbarkeit des Polrings 10 relativ zu dem inneren Ring 4 durch die Bewegungsmöglichkeiten des Elastomers 3 begrenzt ist. Da Elastomerbauteile regelmäßig zu Lagerungs- und Dämpfungszwecken im Kraftfahrzeug eingesetzt werden, ist diese Ausführungsform insbesondere für die Schwingungs- und Vibrationsmessung im Kraftfahrzeug von Interesse.

Gemäß der Ausführungsform kann die relative Verdrehung E des Polrings 10 gegenüber dem inneren Ring 4 ermittelt werden, was einer Bewegung des Polrings 10 um seine Längsachse entspricht. Diese Bewegung stellt eine Bewegung hinsichtlich eines einzigen Freiheitsgrades dar, wobei der Einfluss von Bewegungen des Polrings 10 relativ zum inneren Ring 4 hinsichtlich der fünf verbleibenden Freiheitsgrade auf die Messung der Verdrehung E sehr gering ist. Störsignale aufgrund von Bewegungen längs der vertikalen Achse 13 können nämlich durch die geometrische Anordnung der beiden Sensoren 6 und 7 kompensiert werden. Entsprechendes gilt für Störsignale aufgrund von Rotationen des Polrings 10 um die vertikale Achse 13 oder um die horizontale Achse 14. Ferner kann eine Bewegung des Polrings 10 entlang seiner Längsachse (senkrecht zur Zeichenebene) relativ zum inneren Ring 4 durch eine ausreichende Magnettiefe bzw. Polringlänge kompensiert werden.

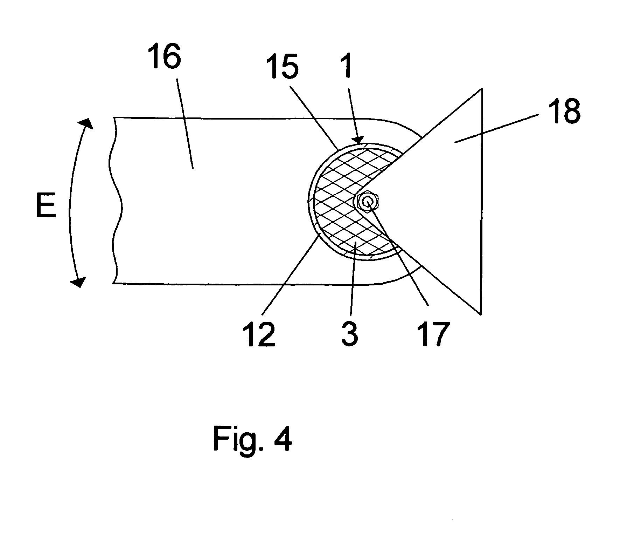

Aus Figur 4 ist eine schematische Ansicht der Ausführungsform des erfindungsgemäßen Lagers 1 im eingebauten Zustand ersichtlich, wobei das Lager 1 in einer Ausnehmung 15 eines nur teilweise dargestellten Querlenkers 16 festsitzend aufgenommen ist. Der Innenring des Lagers 1 ist über eine Schraubverbindung 17 fest mit einer Lageraufnahme 18 des Fahrzeugaufbaus verbunden, so dass der Querlenker 16 über das Lager 1 schwenkbar an dem Fahrzeugaufbau montiert ist. Der Pfeil E symbolisiert dabei eine mögliche Schwenkbewegung des Querlenkers relativ zum Fahrzeugaufbau.

Zwar wurde die Erfindung anhand einer im Querschnitt kreisförmigen Ausführungsform erläutert, selbstverständlich sind aber auch im Querschnitt elliptische oder andere geometrische Ausgestaltungen des erfindungsgemäßen Lagers möglich.

### Bezugszeichenliste

- 1: Gummilager
- 2: Außenring
- 3: Gummiring
- 4: Innenring
- 5: Hohlraum
- 6, 7: Sensoren
- 8,9: Ausnehmungen
- 10: Polring
- 11: Permanentmagnete
- 12: Ferromagnetischer Schlussring
- 13: Vertikale Achse
- 14: Horizontale Achse
- 15: Ausnehmung
- 16: Querlenker
- 17: Schraubverbindung
- 18: Lageraufnahme
- E: Verdrehung, Ein- bzw. Ausfederung
- H, K, R: Störbewegungen

## Patentansprüche

1. Gummilager für einen Lenker einer Radaufhängung eines Fahrzeugs, wobei das Gummilager (1) einen Außenring (2) sowie einen Innenring (4), welche beide über ein Elastomer (3) miteinander verbunden sind, aufweist, sowie mindestens ein im oder am Gummilager (1) angeordneten Sensor (6), der die relative Verdrehung (E) der durch das Gummilager (1) miteinander verbundenen Fahrzeugteile (16, 18) ermittelt, **dadurch gekennzeichnet ,dass** der räumliche Bereich zwischen dem Sensor (6) und einem die von dem Sensor (6) zu erfassende physikalische Größe liefernden Messgrößengeber (10) mit einem Elastomer (3) gefüllt ist, wobei der Messgrößengeber (10 ein Magnetfeld erzeugt und der Sensor (6) ein Magnetfeldsensor ist.

2. Lager nach Anspruch 1, **dadurch gekennzeichnet, dass** das Gummilager (1) ein Drehlager, ein Drehgleitlager oder ein Gummidrehlager ist.

3. Lager nach Anspruch 1, **dadurch gekennzeichnet, dass** der Sensor (6) ein HallSensor oder ein magnetoresistiver Sensor ist.

4. Lager nach Anspruch 1 oder 3, **dadurch gekennzeichnet, dass** der Messgrößengeber einen Permanentmagneten (11) aufweist.

5. Lager nach Anspruch 4, **dadurch gekennzeichnet, dass** der Messgrößengeber ein Polring (10) ist.

6. Lager nach Anspruch 5, **dadurch gekennzeichnet, dass** das Lager einen mit dem Polring (10) konzentrischen Ring aufweist, an welchem der Sensor (6) angeordnet ist.

7. Lager nach Anspruch 6, **dadurch gekennzeichnet, dass** das Elastomer (3) in dem Zwischenraum zwischen dem Polring (10) und dem konzentrischen Ring angeordnet ist.

8. Lager nach Anspruch 6 oder 7, **dadurch gekennzeichnet, dass** an dem konzentrischen Ring ein dem ersten Sensor (6) diametral gegenüberliegender zweiter Sensor (7) angeordnet ist.

9. Lager nach einem der Ansprüche 6 bis 8, **dadurch gekennzeichnet, dass** der Polring (10) einen äußeren Ring bildet, von dem der einen inneren Ring (4) bildende konzentrische Ring und das Elastomer (3) umschlossen sind.

10. Lager nach Anspruch 9, **dadurch gekennzeichnet, dass** um den Polring (10) herum ein ferromagnetischer Schlussring (12) angeordnet ist.

11. Verwendung eines Gummilagers nach einem der Ansprüche 1 bis 10 zur Schwingungs- und Vibrationsmessung in einem Kraftfahrzeug.

## Claims

1. Rubber bearing for a steering wheel of a wheel suspension of a motor vehicle, which rubber bearing (1) has an outer ring (2) and an inner ring (4), the two of which are connected to one another by means of an elastomer (3), and at least one sensor (6) disposed in or on the rubber bearing (1), which detects the relative twisting movement (E) of the vehicle parts (16, 18) connected to one another via the rubber bearing (1), **characterised in that** the space between the sensor (6) and a measurement transmitter (10) supplying the physical variable to be detected by the sensor (6) is filled with an elastomer (3), and the measurement transmitter (10) creates a magnetic field and the sensor (6) is a magnetic field sensor.

2. Bearing as claimed in claim 1, **characterised in that** the rubber bearing (1) is a rotary bearing, a rotary friction-type bearing or a rubber rotary bearing.

3. Bearing as claimed in claim 1, **characterised in that** the sensor (6) is a Hall-effect sensor or a magnetoresistive sensor.

4. Bearing as claimed in claim 1 or 3, **characterised in that** the measurement transmitter has a permanent magnet (11).

5. Bearing as claimed in claim 4, **characterised in that** the measurement transmitter is a pole ring (10).

6. Bearing as claimed in claim 5, **characterised in that** the bearing has a ring concentric with the pole ring (10), on which the sensor (6) is disposed.

7. Bearing as claimed in claim 6, **characterised in that** the elastomer (3) is disposed in the space between the pole ring (10) and the concentric ring.

8. Bearing as claimed in claim 6 or 7, **characterised in that** a second sensor (7) is disposed on the concentric ring lying diametrically opposite the first sensor (6).

9. Bearing as claimed in one of claims 6 to 8, **characterised in that** the pole ring (10) forms an outer ring, by means of which the concentric ring forming an inner ring (4) and the elastomer (3) are surrounded.

10. Bearing as claimed in claim 9, **characterised in that** a ferromagnetic closing ring (12) is disposed around the pole ring (10).

11. Use of a rubber bearing as claimed in one of claims 1 to 10 for measuring oscillations and vibrations in a motor vehicle.

## Revendications

1. Palier en caoutchouc pour une bielle d'une suspension de roue d'un véhicule, dans lequel le palier en caoutchouc (1) présente un anneau externe (2) ainsi qu'un anneau interne (4), qui sont raccordés l'un à l'autre via un élastomère (3), ainsi qu'au moins un capteur (6) agencé dans ou sur le palier en caoutchouc (1), qui détermine la torsion relative (E) des pièces de véhicule (16, 18) raccordées l'une à l'autre par le palier en caoutchouc (1), **caractérisé en ce que** la zone spatiale comprise entre le capteur (6) et un indicateur de grandeur de mesure (10) délivrant la mesure physique à enregistrer par le capteur (6) est remplie d'un élastomère (3), l'indicateur de grandeur de mesure (10) produisant un champ magnétique et le capteur (6) étant un capteur de champ magnétique.

2. Palier selon la revendication 1, **caractérisé en ce que** le palier en caoutchouc (1) est un palier de pivotement, un palier lisse de pivotement ou un palier de pivotement en caoutchouc.

3. Palier selon la revendication 1, **caractérisé en ce que** le capteur (6) est un capteur de Hall ou un capteur magnétorésistant.

4. Palier selon la revendication 1 ou 3, **caractérisé en ce que** l'indicateur de grandeur de mesure présente un aimant permanent (11).

5. Palier selon la revendication 4, **caractérisé en ce que** l'indicateur de grandeur de mesure est un anneau polaire (10).

6. Palier selon la revendication 5, **caractérisé en ce que** le palier présente un anneau concentrique avec l'anneau polaire (10) et sur lequel est agencé le capteur (6).

7. Palier selon la revendication 6, **caractérisé en ce que** l'élastomère (3) est agencé dans l'espace intermédiaire compris entre l'anneau polaire (10) et l'anneau concentrique.

8. Palier selon la revendication 6 ou 7, **caractérisé en ce que** sur l'anneau concentrique est agencé un second capteur (7) diamétralement opposé au premier capteur (6).

9. Palier selon l'une quelconque des revendications 6 à 8, **caractérisé en ce que** l'anneau polaire (10) forme un anneau externe qui entoure l'anneau concentrique formant un anneau interne (4) et l'élastomère (3).

10. Palier selon la revendication 9, **caractérisé en ce qu'**un anneau de fermeture ferromagnétique (12) est agencé autour de l'anneau polaire (10).

11. Utilisation d'un palier en caoutchouc selon l'une quelconque des revendications 1 à 10 pour mesurer les oscillations et les vibrations dans un véhicule automobile.
